# EUROPEAN PATENT APPLICATION

(11) **EP 4 273 608 A1**
(43) Date of publication of application: **08.11.2023**
(21) Application number: 22171672.3
(22) Date of filing: 04.05.2022
(51) Int. Cl.: G02B 21/00, G02B 21/36, G06V 10/774

(54) **AUTOMATIC ACQUISITION OF MICROSCOPY IMAGE SETS**

(71) Applicant: Leica Microsystems CMS GmbH, 35578 Wetzlar (DE)
(72) Inventor: SERRA LLETI, Dr. José Miguel, D-35578 Wetzlar (DE); BELJAN, Mate, D-35578 Wetzlar (DE)
(74) Representative: Erden, Lejs Mersid

(57) **Abstract**

A computer-implemented image acquisition method is provided. The method may comprise the step of receiving user input for indicating (106) at least one quality condition (206) associated with a plurality of regions of interest (204) of a sample arrangement (200) to be imaged using a fluorescence microscope (310). The at least one quality condition preferably comprises a target signal-to-noise ratio. The method may comprise the step of causing the fluorescence microscope (310) to automatically acquire (108), for each region of interest (204), at least one microscopy image using illumination settings which are automatically determined (114) such that the target signal-to-noise ratio is met. The method may comprise the step of generating (118) a dataset usable for generating, training, validating and/or testing, or otherwise optimizing, a machine-learning model. The dataset may comprise the acquired microscopy images or references thereto.

## Description

### TECHNICAL FIELD

The present invention generally relates to the field of data processing in microscopy applications, and in particular to improved techniques for acquiring large sets of microscopy images to be used in machine-learning.

### BACKGROUND

Certain microscopy applications require large sets of images. As an example, when the goal is to train a denoising model for a microscope using techniques such as disclosed in EP 21204605.6 titled "Training a denoising model for a microscope" of the applicant, enough training images must be acquired. Setting up the imaging for a large sample, in particular with different heterogenous regions, e.g., in a well plate, can be quite tedious, as the user normally has to adjust the acquisition settings for each imaging position and find regions of interest. On the other hand, just using one set of acquisition parameters will lead to suboptimal results, as some images will typically be too bright or too dark, and fluorophores will not be visible. In scenarios like these, acquiring a sufficient number of images to be used as training data for machine learning, in particular deep learning, applications can become a major bottleneck.

In the field of fluorescence microscopy image acquisition, research has been done to address the tedious and time-consuming task of manually locating comparable specimen and repeatedly launching the same acquisition protocol (see, e.g., Methods in Cell Biology, Volume 123, 2014, Chapter 26 "Adaptive fluorescence microscopy by online feedback image analysis", pages 489-503, doi: 10.1016/B978-0-12-420138-5.00026-4).

As another example, "AutoScanJ: A Suite of ImageJ Scripts for Intelligent Microscopy" by Tosi S. et al. (18 March 2021, Frontiers in Bioinformatics, doi: 10.3389/fbinf.2021.627626) discloses a suite of ImageJ scripts for imaging targets of interest by automatically driving a motorized microscope at the corresponding locations.

US 2021/0264595 A1 discloses a method for training of convoluted neural networks using computer-assisted microscope image acquisition and pre-classification of training images for biological objects of interest. The methods combine use of an automated scanning platform, on-the-fly image analysis parallel to the scanning process, and a user interface for review of the pre-classification performed by the software.

Usual workflows, including feedback microscopy, have been extensively centered around region definition inside the sample, job definition (e.g., selecting modality, fluorophores and objective lenses) and automatization of the focus (e.g., with a focus map). Such functionality is nowadays provided as a building block in many commercially available microscopes.

However, it remains to be very difficult to set all image acquisition conditions efficiently, especially regarding illumination. One typical approach is to define general illumination conditions for the whole acquisition or going manually region by region. That means, that in a large sample, it cannot be ensured that the staining intensity and quality will reach adequate and homogeneous levels for all the imaged areas. Existing tools aiming at an automation of data acquisition are still not versatile enough, requiring tedious and continuous manual tuning.

It is therefore a problem underlying the invention to provide improved microscopy image acquisition techniques and thereby overcome the above-mentioned disadvantages of the prior art at least in part.

### SUMMARY

In one embodiment of the invention, a computer-implemented image acquisition method is provided. The method may comprise the step of receiving user input for indicating at least one quality condition associated with a plurality of regions of interest of a sample arrangement to be imaged using a fluorescence microscope. The at least one quality condition preferably comprises a target signal-to-noise ratio. The method may comprise the step of causing the fluorescence microscope to automatically acquire, for each region of interest, at least one microscopy image using illumination settings which are automatically determined such that the target signal-to-noise ratio is met. The method may comprise the step of generating a dataset usable for generating, training, validating and/or testing, or otherwise optimizing, a machine-learning model. The dataset may comprise the acquired microscopy images or references thereto.

Accordingly, the method provides a workflow for automatic data acquisition, in particular a workflow for auto-illumination-driven automatic acquisition of large sets of images. The workflow may have some resemblance to feedback microscopy workflows in the sense that regions of interest (ROIs) can be defined, and tasks can be executed in the ROIs, but the disclosed method requires only minimal user intervention. In existing workflows, the user must, typically beforehand, set up illumination conditions for each region, such as gain, and exposure time, for each fluorophore or transmitted light. If the sample has different regions where the user wishes to acquire different conditions, e.g., in a multi-well plate with different dies or fluorophores per row, or a large sample (e.g., brain) with regions, this is a time-consuming step. The user is typically not interested per se in setting these different conditions, but oftentimes must do it to achieve the desired results. Embodiments of the invention allow to skip this indirection and have the user specify directly the desired qualities (e.g., metrics).

In addition, it might be very difficult for a user to discover sensitive regions without photobleaching and damaging them. In some scenarios, e.g., long-time experiments, it would be impossible for the user to keep the acquisition settings properly adjusted over the whole experiment. By setting up conditions in the auto-illumination, it is possible to achieve this.

Certain uses of embodiments of the invention may be centered around light microscopy using widefield, confocal and transmitted light. The proposed workflow can be applied in fixed or living samples. In fixed or prepared regions of the sample (where photobleaching is possible), images can be obtained with a higher SNR (signal to noise ratio) as determined by the auto-illumination features of aspects of the invention. For living samples, such as high-throughput 3D imaging of tissue culture cells, researchers usually try to minimize photobleaching and phototoxicity by minimizing the energy input. In aspects of the invention, the amount of phototoxicity can instead be a condition set by the auto-illumination.

In one practical implementation, the step of automatically acquiring, for each region of interest, at least one microscopy image using illumination settings which are automatically determined such that the target signal-to-noise ratio is met can be realized using techniques disclosed in WO 2022/028694 A1 titled "Method for adjusting the illumination in a fluorescence microscope, and corresponding fluorescence microscope" of the applicant.

In one aspect of the invention, the at least one quality condition comprises a target signal-to-noise ratio which applies to the entirety of the plurality of interest. In addition of alternatively, the at least one quality condition may comprise a target signal-to-noise ratio which applies to a selected one of the plurality of regions of interest. Accordingly, a global target SNR as well as individual local target SNRs can be conveniently chosen by the user in relation to the ROIs, and the method will automatically acquire corresponding images using image acquisition settings for meeting the target SNR settings. The target signal-to-noise ratio may be, or comprise, a specific signal-to-noise-ratio value or a minimum signal-to-noise ratio value. The target signal-to-noise ratio may apply to a selected one of a plurality of channels.

In another aspect of the invention, the at least one quality condition further comprises at least one of a threshold condition based on a light dose, a threshold condition based on fluorophore quality, or a threshold condition based on image quality, such as contrast. Accordingly, particularly versatile image acquisition scenarios are made possible in a user-friendly and efficient way to achieve one or more of the following benefits:
- Ensuring similar quality across the whole acquired dataset by defining a simple set of metrics, or even a single metric such as a minimum SNR.
- Enabling the user to define conditions at different ROIs. This may be done by simply selecting the channels to be imaged and the desired quality, i.e., without having to set up the acquisition parameters individually for each region. This provides for a particularly efficient implementation of use cases such as "I want ROI no. 1 to have an SNR of 5 in channel 3 and ROI no. 2 to have an SNR of 7 in channel 2".
- Enabling the definition of threshold conditions based on light dose, fluorophore density or quality, to image and discover ROIs (e.g., ensuring that all fluorophores are visible in a region). The user may specify regions where the conditions are applied or let the system filter the ROIs based on the conditions.

In a preferred usage scenario, the sample arrangement comprises a plurality of distinct samples. In particular, the sample arrangement may be a well plate. In one aspect, the method may comprise the further step of receiving user input for indicating a selection of the plurality of regions of interest. The selection may indicate all samples of the sample arrangement, one or more individual samples of the sample arrangement, one or more rows and/or columns of samples of the sample arrangement, and/or a shape enclosing one or more samples of the sample arrangement, wherein, optionally, the shape is one of a square, a circle or a free shape. Accordingly, the user is given full control over which parts of the multi-sample set is to be processed.

In another aspect of the invention, the method comprises the step of receiving user input for indicating a plurality of tags. The generated dataset may associate the acquired microscopy images with the plurality of tags. The user input may indicate the plurality of tags in relation to the plurality of regions of interest. In the generated dataset, the plurality of tags may be associated with those microscopy images that are associated with a respective related region of interest. The plurality of tags may comprise at least one tag that qualifies an associated microscopy image for a specific machine-learning purpose, in particular as one or more of ground truth, training data, validation data or test data.

The above-mentioned tagging functionality of aspects of the invention is based on the following principles:
- Each condition may generate a tag, and each region can be associated with the tag and vice-versa. Accordingly, a corresponding mapping may be stored in metadata of the images, which makes the process particularly reproducible.
- If the carrier is already existing and is mapped in the user interface (e.g., a full well plate with all rows and columns), each well could be automatically tagged in the metadata, with its correspondent condition.

There are several uses of tags as provided in aspects of the invention. For example, a tag may indicate the presence (above a threshold) of an individual fluorophore in a region of interest. In a well plate with multiple groups of tagged wells (e.g., odd wells contain one combination, even ones another), one may set or vary the quality condition (SNR) only for the wells from one group or a selected subset of groups. A tagging or grouping may also be helpful in scenarios where oftentimes multiple well plate positions will contain the same content for reproducibility of results. For example, when an experiment needs to be replicated multiple times, using tags, and saving metadata of the first experiment, the conditions can be replicated in the following experiments.

Certain aspects of the invention also provide a dataset, in particular a training dataset, validation dataset and/or training dataset, usable for a machine-learning model. The dataset may comprise a plurality of microscopy images, or references thereto. The images may be obtained using any of the methods disclosed herein.

Accordingly, embodiments may be based on, or allow for, using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g., sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g., a classification algorithm, a regression algorithm or a similarity learning algorithm. Classification algorithms may be used when the outputs are restricted to a limited set of values (categorical variables), i.e., the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied, and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e. outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g., a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g., be used to store, manipulate, or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g., based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g., of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e., support vector networks) are supervised learning models with associated learning algorithms that may be used to analyze data (e.g., in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

The possible use cases for the results produced by embodiments of the invention are manifold. For example, models may be trained to detect specific cell phenotypes, or to target specific organelles, and compare them at different SNRs. This can help to create models that evaluate phototoxicity of assays, or even simpler than that by using simple cell detection and segmentation (cell counting and measures like area of cell nuclei, or if some markers are showing or not).

Embodiments of the invention also provide a data processing apparatus, in particular a computer device or a control unit for a microscope, comprising means for carrying out any of the methods disclosed herein. A computer program with a program code is also provided for performing any of the methods disclosed herein when the computer program is run on a processor.

### SHORT DESCRIPTION OF THE FIGURES

The disclosure may be better understood by reference to the following drawings:
- Fig. 1:: A schematic overview of an auto-illumination workflow in accordance with embodiments of the invention.
- Fig. 2:: A schematic illustration of a well plate experiment in accordance with embodiments of the invention.
- Fig. 3:: A schematic illustration of a system in which embodiments of the invention may be implemented.

### DETAILED DESCRIPTION

Exemplary embodiments of the invention will now be described which provide an auto-illumination-driven autonomous microscopy image acquisition workflow with a final step oriented towards big data acquisition and tagging for machine-learning purposes.

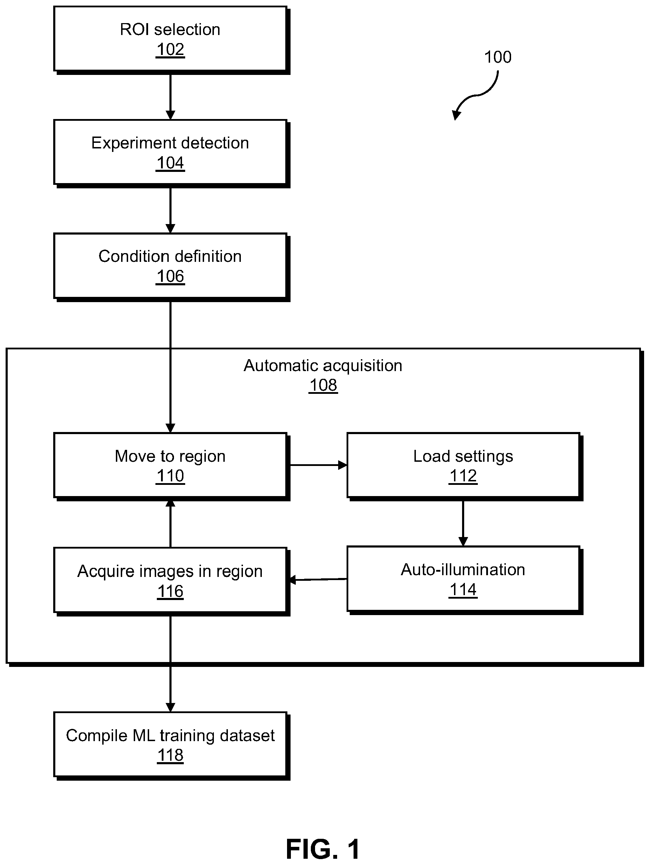

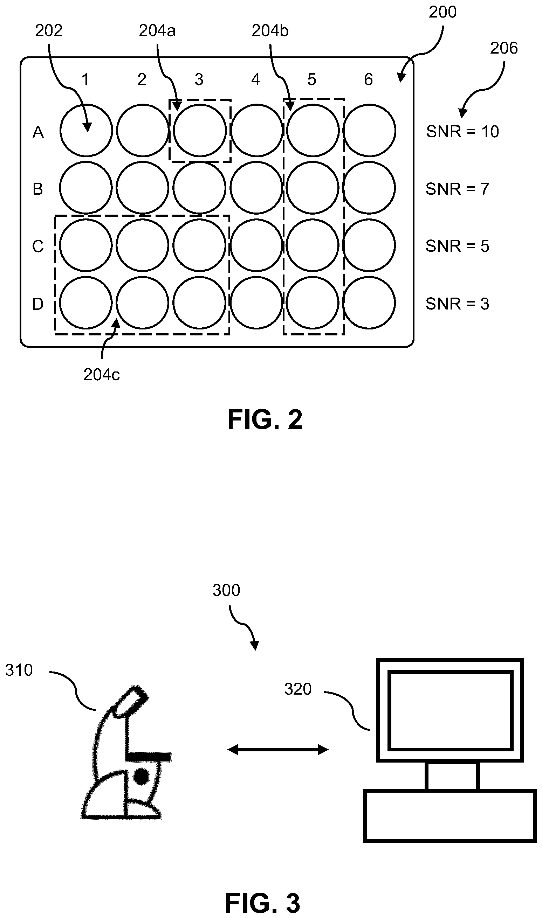

Fig. 1 illustrates an embodiment of an auto-illumination workflow 100 performed in relation to samples in a well plate 200 as exemplarily shown in Fig. 2. Notably, the illustrated well plate is only one example of a sample set, which may comprise any collection of sliders, petri dishes, or the like.

In step 102 of Fig. 1, one or more ROIs are selected, as indicated by a user-selection. For example, the user can request a full sample scan or a selection of wells in a well plate (e.g., by rows or columns). The user may also tag wells 202 individually, as illustrated by the ROI 204a in Fig. 2. The user may select the wells using a specific closed shape (e.g., a row 204b, a square, a rectangle 204c, a circle, a free shape, or the like). ROIs may be tagged independently, and the corresponding tag for the acquired images in the region will be stored as metadata associated with the acquired images.

The following are examples how the data is labelled according to tags defined by the user when the experiment is performed:
- In a first example, regions 1,2,3 are acquired with high SNR and tagged as "Ground Truth"
- In a second example, regions 4,5,6 are acquired at a plurality of SNRs and are tagged as "Input data"
- In a third example, rows from A to D are acquired with different SRNs 206, as illustrated in Fig. 2.
- In a fourth example, well plate rows A and B are acquired with fluorophores X1 and X2 at high SNR and labelled as "Protein A" and "Protein B".
- In a fifth example, well plate row C and D are acquired with fluorophores X2 and X3 with an illumination condition for low phototoxicity and labelled as "Protein B" and "Protein C".

Returning to Fig. 1, in step 104 the experiment to be performed may be defined. Such an experiment definition may serve to specify aspects like a definition of the settings which will be applied in general for the whole sample, a selection of one or more modalities (e.g., widefield (WF), Confocal Laser Scanning Microscope (CLSM), transmitted light, Differential interference contrast (DIC) microscopy, RGB, or any other modalities), a selection of fluorophores to image per region of interest (ROI), which may be different per ROI, a field of view (FOV), a resolution, a frame duration, an objective lens, a z-range, a time series, or any combination thereof.

As mentioned, embodiments of the invention may associate tags with ROIs 204. Each tag defined for each ROI 204 may have its own experiment definition.

In step 106, the condition(s) which will be applied to each ROI are defined. Exemplary conditions may be selected from one or many of:
- Achieving a specific SNR
- Presence of a certain fluorophore or combination of fluorophores with a defined SNR
- A specific density of photons and/or energy of certain fluorophore(s), e.g., to detect a threshold of fluorescence, or to avoid phototoxicity

It is also be possible to iterate one task with variations of a parameter (e.g., SNR, threshold of fluorescence, or the like).

The person skilled in the art will understand that the sequence of the steps 102, 104 and 106 as shown in Fig. 1 is not mandatory and may be changed.

In step 108, the automatic acquisition is performed. The microscope moves to each defined region in step 110 and loads the conditions (defined in step 106) in step 112. Additional parameters may be taken into account, such as autofocus, drift correction or changing objectives.

In step 114, an auto-illumination is performed, in which the conditions defined in step 106 are applied to the specified fluorophores and/or modalities. In one embodiment, the auto-illumination functionality is implemented as disclosed in WO 2022/028694 A1 titled "Method for adjusting the illumination in a fluorescence microscope, and corresponding fluorescence microscope" of the applicant. One or more images are acquired in step 116.

When the images have been acquired for the current region 204, the process 100 moves to the next region 204 and repeats until all ROIs 204 haven been processed.

The output if the process 100 in step 118 is a collection of acquired images with supplementary information, preferably stored in metadata associated with the images, which may then be used for various technical tasks, including training, validating or otherwise optimizing a machine-learning model. In addition to the acquired images (or a reference to the images), the output dataset may comprise one of more of the parameters chosen for the auto-illumination, the tags, additional metadata and, in the well-plate example, a map of the well-plate with the ROIs.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some embodiments relate to a microscope comprising a system as described in connection with one or more of the Figs. 1 to 2. Alternatively, a microscope may be part of or connected to a system as described in connection with one or more of the Figs. 1 to 2. Fig. 3 shows a schematic illustration of a system 300 configured to perform a method described herein. The system 300 comprises a microscope 310 and a computer system 320. The microscope 310 is configured to take images and is connected to the computer system 320. The computer system 320 is configured to execute at least a part of a method described herein. The computer system 320 may be configured to execute a machine learning algorithm. The computer system 320 and microscope 310 may be separate entities but can also be integrated together in one common housing. The computer system 320 may be part of a central processing system of the microscope 310 and/or the computer system 320 may be part of a subcomponent of the microscope 310, such as a sensor, an actor, a camera or an illumination unit, etc. of the microscope 310.

The computer system 320 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 320 may comprise any circuit or combination of circuits. In one embodiment, the computer system 320 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 320 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 320 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 320 may also include a display device, one or more speakers, and a keyboard and/or controller, which can include a mouse, trackball, touch screen, voice-recognition device, or any other device that permits a system user to input information into and receive information from the computer system 320.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

## Claims

1. A computer-implemented image acquisition method with at least the following steps:
receiving user input for indicating (106) at least one quality condition (206), comprising a target signal-to-noise ratio, associated with a plurality of regions of interest (204) of a sample arrangement (200) to be imaged using a fluorescence microscope (310);
causing the fluorescence microscope (310) to automatically acquire (108), for each region of interest (204), at least one microscopy image using illumination settings which are automatically determined (114) such that the target signal-to-noise ratio is met; and
generating (118) a dataset usable for generating, training, validating and/or testing a machine-learning model, the dataset comprising the acquired microscopy images or references thereto.

2. The method of claim 1, wherein the at least one quality condition (206) comprises a target signal-to-noise ratio which applies to the entirety of the plurality of interest.

3. The method of claim 1 or 2, wherein the at least one quality condition (206) comprises a target signal-to-noise ratio which applies to a selected one of the plurality of regions of interest (204).

4. The method of any one of the preceding claims, wherein the target signal-to-noise ratio is a specific signal-to-noise-ratio value or a minimum signal-to-noise ratio value.

5. The method of any one of the preceding claims, wherein the target signal-to-noise ratio applies to a selected one of a plurality of channels.

6. The method of any one of the preceding claims, wherein the at least one quality condition (206) further comprises at least one of:
a threshold condition based on a light dose;
a threshold condition based on fluorophore quality; or
a threshold condition based on image quality.

7. The method of any one of the preceding claims, wherein the sample arrangement (200) comprises a plurality of distinct samples (202);
wherein, optionally, the sample arrangement (200) is a well plate.

8. The method of claim 7, comprising the further step of receiving user input for indicating (102) a selection of the plurality of regions of interest (202), wherein the selection indicates:
all samples of the sample arrangement (200);
one or more individual samples (204a) of the sample arrangement (200);
one or more rows and/or columns of samples (204b) of the sample arrangement (200);
a shape enclosing one or more samples (204c) of the sample arrangement (200), wherein, optionally, the shape is one of a square, a circle or a free shape.

9. The method of any one of the preceding claims, comprising the further step of receiving user input for indicating a plurality of tags; and
wherein the generated dataset associates the acquired microscopy images with the plurality of tags.

10. The method of claim 9, wherein the user input indicates the plurality of tags in relation to the plurality of regions of interest; and
wherein the plurality of tags is associated, in the generated dataset, with those microscopy images that are associated with a respective related region of interest.

11. The method of claim 9 or 10, wherein the plurality of tags comprises at least one tag that qualifies an associated microscopy image for a specific machine-learning purpose, in particular as one or more of ground truth, training data, validation data or test data.

12. A data processing apparatus, in particular a computer device (320) or a control unit for a microscope (310), comprising means for carrying out the method of any one of claims 1-11.

13. A computer program with a program code for performing the method of any one of claims 1-11 when the computer program is run on a processor.

14. A dataset, in particular a training dataset, validation dataset and/or training dataset, usable for a machine-learning model, the dataset comprising a plurality of microscopy images, or references thereto, obtained using the method of any one of claims 1-11.

15. A microscope (310), in particular a fluorescence microscope, configured for use in the method of any one of claims 1-11.
